Europäisches Patentamt

European Patent Office

Office européen des brevets

(11) Numéro de publication: **0 290 417**
**A2**

# (12) DEMANDE DE BREVET EUROPEEN

(21) Numéro de dépôt: 88870074.7

(51) Int. Cl.⁴: **C 04 B 26/02**

(22) Date de dépôt: 29.04.88

(30) Priorité: 04.05.87 BE 8700473

(43) Date de publication de la demande:
09.11.88 Bulletin 88/45

(84) Etats contractants désignés:
AT BE CH DE ES FR GB GR IT LI LU NL SE

(71) Demandeur: **COMPAGNIE LIEGEOISE DES BETONS DE RESINE en abrégé COLBER, Société Coopérative**
**Rue du Pertuis 214**
**B-4100 Seraing (BE)**

(72) Inventeur: **de Borman, Henri**
**rue Rouvroi 52**
**B-4230 Horion-Hozémont (BE)**

(74) Mandataire: **Dellicour, Paul**
**Office de Brevets E. Dellicour rue Fabry 18/012**
**B-4000 Liège (BE)**

(54) Procédé de mise en oeuvre de bétons de résine luminescents.

(57) Le procédé consiste à appliquer une ou plusieurs résines de surface, contenant un absorbeur U.V., et à couler ou projeter une couche d'un mélange pigmenté. Dans le cas de plusieurs résines de surface le première est de type acrypolyuréthane et la seconde est soit de type sanitaire à haute résistance chimique, soit à haute résistance à l'abrasion additionnée de microbilles de verre pleines. La couche de résine acrypolyuré-thane est appliquée soit en topcoat, soit par projection dans le moule.

EP 0 290 417 A2

# Description

## Procédé de mise en oeuvre de bétons de résine luminescents.

La présente invention est relative aux bétons de résine et a pour but de réaliser un béton de résine luminescent possédant toutes les qualités propres au béton de résine classique, c'est-à-dire la variété des formes réalisables, l'état de surface qui peut varier du mat au poli, ainsi que les textures structurées, une grande résistance aux agents chimiques et une excellente tenue dans le temps compte tenu d'une autre caractéristique du béton de résine, qui est son absorption d'eau quasi nulle (0,5 %), ce qui est primordial pour la stabilité des pigments luminescents et surtout pour le phosphorescent.

Suivant l'invention le procédé de mise en oeuvre de bétons de résine luminescents consiste à appliquer une ou plusieurs résines de surface, contenant un absorbeur U.V., et à couler ou projeter une couche d'un mélange pigmenté.

Le procédé de mise en oeuvre suivant l'invention s'effectue par une coulée en masse, en multicouche par coulée ou en multicouche par projection, comme énoncé dans les sous-revendications.

Suivant l'invention la première résine de surface est de type acrypolyuréthane et la seconde est soit une résine de type sanitaire à haute résistance chimique, soit une résine à haute résistance à l'abrasion additionnée de microbilles de verre pleines.

Comme absorbeur U.V. il a paru avantageux suivant l'invention d'utiliser du Tinuvin de la société Ciba-Geigy, dont le pourcentage varie de 0,5 % à 1,5 % suivant les sollicitations.

L'invention est définie maintenant sur la base d'une description plus détaillée des différents modes de mise en oeuvre.

La coulée en masse se justifie pour des pièces soumises à l'abrasion ou pour des pièces de faible épaisseur soumises à un effort mécanique faible. On effectue la coulée en masse d'un mélange pigmenté composé de résine dans un pourcentage de 25 % à 30 % et de calcite blanche dans un pourcentage de 70 % à 75%. A ce mélange est ajouté un certain pourcentage de pigments, qui varie suivant les teintes, soit :
± 3 % pour le Neon Red,
± 5 % pour le Fire Orange,
± 10 % pour le Saturn Yellow,
± 6 % pour les teintes Coroma Magenta, Aurora Pink, Rocket Red, Blase Orange, Arc Yellow et Signal Green.

La multicouche par coulées ne s'applique que dans les moules plans ou dans un moule dont le relief permet son utilisation. Par exemple, un sigle en relief sur un élément plus ou moins plan, où seul le sigle sera coulé en fluorescent. On utilise ici une formule type (calcite - résine - pigment), le mélange utilisé étant identique à celui de la coulée en masse. Le béton de résine est coulé en fine couche et la masse est remplie par un béton de résine traditionnel.

Cette technique permet dans certains moules appropriés de créer des graphismes. Celui-ci sera en creux dans le moule et rempli de mélange pigmenté tandis que la masse servira de support et de fond au graphisme. Pour cette technique un système catalytique programmé sera utilisé pour éviter les tensions entre les deux mélanges.

Lorsque le relief du moule ne permet pas un système de multicouche par coulées et qu'une coulée en masse s'avère trop onéreuse et injustifiée ou dans le cas de béton de résine phosphorescent, on réalise une multicouche par projection à l'aide d'air comprimé. Sur la résine de surface est projeté un mélange pigmenté composé de résine thixotropée l'aérosil et de pigments, dont les pourcentages sont de 8 % pour le Saturn Yellow et le Signal Green et de 6% pour les autres teintes et de 37,5 % pour le phosphorescent. Cette couche est projetée en une épaisseur d'environ 3 mm.

Le mélange de masse se compose comme suit :
B L P 2 (CACO3)      ± 12 %
Durcal 40 (calcaire)      ± 10 %
Durcal 130      ± 23 %
Granicalcium 05-1,5 m/m (ou Micart 05-1,5 m/m)      ± 40 %
Résine      ± 14 %
Pigment blanc TiO2      ± 1 %

Le fait de travailler les bétons de résine par un système d'application multicouche ne veut pas dire toutefois qu'il s'agit d'une stratification. En effet, chaque couche est appliquée avant polymérisation complète de la précédente et redissout une partie de celle-ci. On obtient donc une matière bien homogène.

Le procédé de mise en oeuvre de bétons de résine luminescents suivant l'invention s'applique aussi à une coulée de pièces comportant un sigle incorporé, avec les détails suivants :
- application de deux couches de résine de surface avec dans la seconde couche, avant polymérisation, application du sigle (élément de silicone).
- coulée d'un mélange ordinaire autour du sigle et, dès gélification, retrait du silicone dont le dessin reste intégré dans la masse.
- coulée d'un mélange pigmenté dans le creux représentant le sigle.

Un béton de résine luminescent réalisé suivant l'invention répond aux caractéristiques suivantes :
- résistance à la flexion (NBN 224 L = 0,2 mm 35N/mm2) 350 Kg/cm2.
- résistance à la compression sur éprouvettes cubiques de 30 mm de côté 71N/mm2 700 Kg/cm2.
- résistance aux chocs de corps durs (NBN 224) 1,75 KJ/m2.
- résistance à la traction 17 N/mm2.
- coefficient de dilatation $25\text{-}30.10^{-6}$ mm/mmK.
- résistance aux U.V. et H20, test au xenotest : exposition 500 heures sous une lampe au xénon 2700 W et sous humidité relative 60 % sans modification visible.
- gélitivité (NBN 224) après quinze cycles successifs comprenant le gel à -15° C pendant dix haures et le dégel dans l'eau 20° C, les échantillons ne présentent aucune trace de dégradation visible.
- absorption d'eau à température ambiante (NBN 224) 0,56 %.
- conductivité thermique du matériau à l'état sec (NBN 319) 0,311 w/mK.
- comportement au feu, le matériau appartient à la classe A2 suivant le NBN 521-203, édition juin 80.
- résistance aux acides et aux agents chimiques, les éléments gelcoatés ne présentent aucune dégradation, sauf en présence de la soude à 10 %, qui provoque une perte de brillance.

Le béton de résine luminescent ainsi réalisé se travaille par moulages, autorisant une variation infinie de formes et d'aspects (relief, grain, texture) et donc d'applications.

Pour les pièces en béton de résine luminescent, en plus des techniques de fixation classiques utilisées pour la pierre, il existe la possibilité de noyer dans la masse des inserts de fixation métalliques. La nature polymérique du matériau autorise aussi l'usage d'une large gamme de colles.

Les pièces en béton de résine luminescent sont utilisées soit en parement, soit en autoportant. La particularité luminescente destiné au matériau un usage entre autres dans les domaines de la signalisation et de la sécurité soit extérieur : signalisation, balisage, marquage, repérage des infrastructures de transport et de communication notamment routières, autoroutières, ferrovières, maritimes, fluviales et aériennes, soit intérieur : balisage, marquage, signalisation de sécurité (éventuellement incendie) dans des bâtiments privés tels que cinémas, hôpitaux, parkings, infrastructures industrielles et commerciales, et publics tels que bâtiments administratifs, hôpitaux, gares, etc.

On peut encore citer entre autres comme types de modèles : bandes, plinthes, flèches, sigles, plots, chasse roue, bordures et toutes signalisation verticales, horizontales ou à trois dimensions.

Le béton de résine luminescent suivant l'invention possède des qualités de vieillissement tout à fait nouvelles en raison de la présence d'une épaisse couche de protection (résine acrypolyuréthane et résine de surface) contre l'humidité et contre l'action destructrice des rayons ultra-violets.

Les techniques de mise en oeuvre permettent de réaliser des grandes pièces en béton de résine luminescent. Dans le cas du phosphorescent, malgré l'adjonction de pigments, une mise en oeuvre appropriée permet de garder à la pièce un aspect esthétique, où la tendance jaune-vert propre au phosphorescent n'est pas dominante sans pour cela nuire au rendement.

## Revendications

1. Procédé de mise en oeuvre de bétons de résine luminescents, caractérisé en ce qu'il consiste à appliquer une ou plusieurs résines de surface, contenant un absorbeur U.V., et à couler ou projeter une couche d'un mélange pigmenté.

2. Procédé de mise en oeuvre suivant la revendication 1, caractérisé en ce qu'une des résines de surface consiste en une couche de résine acrypolyuréthane appliquée soit en topcoat, soit par projection dans le moule (in mould).

3. Procédé suivant la revendication 1, caractérisé en ce qu'il s'effectue par une coulée en masse, l'application de la ou des résines de surface ayant lieu dans le moule.

4. Procédé suivant la revendication 1, caractérisé en ce qu'il s'effectue en multicouche par coulées, comportant la coulée d'une fine couche d'un mélange pigmenté suivie de la coulée d'un béton de résine traditionnel donnant la masse et la résistance.

5. Procédé suivant la revendication 1, caractérisé en ce qu'il s'effectue en multicouche par projection, comportant la projection d'une couche de résine thixotropée et pigmentée suivie de la coulée d'une masse en béton de résine blanc + TiO2.

6. Procédé suivant la revendication 1, caractérisé en ce qu'une des résines de surface est une résine à haute résistance à l'abrasion, additionnée de microbrilles de verre pleines.

7. Procédé suivant la revendication 2, caractérisé en ce que la première résine de surface est une résine acrypolyuréthane à haute résistance aux U.V. et H20 et la seconde une résine de type sanitaire à haute résistance chimique.

8. Procédé suivant la revendication 1, caractérisé en ce que le mélange pigmenté est composé de 25 % à 30 % de résine, de 70 % à 75 % de calcite blanche et d'un certain pourcentage de pigments variant suivant les teintes, soit :
± 3 % pour le Neon Red,
± 5 % pour le Fire Orance,
± 10 % pour le Saturn Yellow,
± 6 % pour les teintes telles que Coroma Magenta, Aurora Pinck, Rocket Red, Blase Orange, Arc Yellow et Signal Green.

9. Procédé suivant la revendication 5, caractérisé en ce que dans le mélange pigmenté, composé de résine thixotropée à l'aérosil et de pigments, les pourcentages des pigments sont de l'ordre de 8 % pour le Saturn Yellow et le Signal Green, de l'ordre de 6% pour les autres teintes et de l'ordre de 37,5 % pour les pigments phosphorescents, et en ce que la couche de projection a une épaisseur d'environ 3 mm.

10. Procédé suivant la revendication 5, caractérisé en ce que le mélange de masse se compose de :
BLP2 (CacO3)    ± 12 %
Durcal 40 (calcaire)    ± 10 %
Durcal 130    ± 23 %
Granicalcium ou Micart 05-1,5 m/m    ± 40 %
Résine    ± 14 %
Pigment blanc TiO2    ± 1 %.

11. Pièces en béton de résine luminescent réalisé suivant une ou plusieurs des revendica-

tions 1 à 10.